# EUROPEAN PATENT APPLICATION

(11) **EP 4 806 703 A1**
(43) Date of publication of application: **16.09.2026**
(21) Application number: 26159169.7
(22) Date of filing: 17.02.2026
(51) Int. Cl.: B60K 35/28, B60W 30/14

(54) **WORKING VEHICLE**

(30) Priority: 14.03.2025 JP 2025041513
(71) Applicant: Kubota Corporation, Osaka-shi, Osaka 530-0011 (JP)
(72) Inventor: YAMAWAKI, Komei, SAKAI-SHI, OSAKA, 5900908 (JP)
(74) Representative: Cabinet Beau de Loménie

(57) **Abstract**

A working vehicle includes: a control unit (310) capable of executing a cruise function; an operating lever (100) having a cruise-A switch (110); a display unit (230) capable of displaying a cruising velocity setting screen; and a storage unit (320) capable of storing the velocity used during execution of the cruise function. In a case where a short-pressing operation is performed on the cruise-A switch (110), the control unit (310) causes the display unit (230) to display the cruising velocity setting screen, and causes the storage unit (320) to store a cruise-A running velocity that has been set on the cruising velocity setting screen and is associated with the cruise-A switch (110). In a case where an operation is performed on the cruise-A switch (110) while the cruising velocity setting screen is displayed, the control unit (310) executes the cruise function at the cruise-A running velocity.

## Description

### TECHNICAL FIELD

The disclosure relates to a technique for working vehicles.

### BACKGROUND ART

Conventionally, a technique for working vehicles having a cruise function is known. For example, JP 2021-181806 A discloses such a technique.

JP 2021-181806 A discloses a working vehicle having a cruise function for running at a constant running velocity. When a vehicle velocity memory button is long-pressed, the working vehicle disclosed in JP 2021-181806 A can execute a first function to perform control so that the engine speed and the rotation angle of the trunnion axis at that time are stored, and cruising is performed while the stored engine speed and the like are maintained. Also, in a case where the vehicle velocity memory button is short-pressed while the working vehicle is running at a desired velocity by an operation on an accelerator lever or the like, the working vehicle can execute a second function to perform control so that cruising can be performed at the stored engine speed or the like. With the working vehicle disclosed in JP 2021-181806 A, it is possible to execute cruising at a stored engine speed or the like by performing a simple operation.

In the working vehicle disclosed in JP 2021-181806 A, it is necessary to perform an operation for executing the first function again in a case where setting such as changing the engine speed or the like to be reproduced in cruising is performed. Therefore, to increase operability in setting the cruise function, further improvement is desired.

### SUMMARY OF INVENTION

One aspect of the present disclosure has been made in view of the above circumstances, and an objective thereof is to provide a working vehicle capable of increasing operability in setting a cruise function.

The problem to be solved by one aspect of the present disclosure is as described above, and the means to solve the problem is described in the following.

A working vehicle according to one aspect of the present disclosure is a working vehicle that has a cruise function for automatically running at a set velocity, and includes: a control unit capable of executing the cruise function; an operating unit that has a first switch for performing an operation related to the cruise function; a display unit capable of displaying a cruising velocity setting screen on which the velocity to be used during execution of the cruise function can be set; and a storage unit capable of storing the velocity to be used during execution of the cruise function. In a case where a first operation is performed on the first switch, the control unit causes the display unit to display the cruising velocity setting screen, and causes the storage unit to store a first velocity that is set on the cruising velocity setting screen and is associated with the first switch. In a case where the first switch is operated while the cruising velocity setting screen is displayed, the control unit executes the cruise function at the first velocity.

According to one aspect of the present disclosure, it is possible to increase operability in setting the cruise function.

In a case where a second operation different from the first operation is performed on the first switch, the control unit according to one aspect of the present disclosure causes the storage unit to store the running velocity used during execution of the second operation, the running velocity being associated with the first switch, and executes the cruise function at the running velocity used during execution of the second operation, without causing the display unit to display the cruising velocity setting screen.

According to one aspect of the present disclosure, it is possible to easily execute the cruise function at the running velocity by performing the second operation.

In a case where a third operation is performed on a second switch provided on the operating unit, the control unit according to one aspect of the present disclosure causes the display unit to display the cruising velocity setting screen, and causes the storage unit to store a second velocity that has been set on the cruising velocity setting screen and is different from the first velocity, the second velocity being associated with the second switch. In a case where the second switch is operated while the cruising velocity setting screen is displayed, the control unit executes the cruise function at the second velocity.

According to one aspect of the present disclosure, the cruise function can be executed after checking or resetting of the second velocity to be reproduced in the cruise function.

In a case where a fourth operation is performed on a second switch provided on the operating unit, the control unit according to one aspect of the present disclosure causes the storage unit to store the running velocity used during execution of the fourth operation, the running velocity being associated with the second switch, and executes the cruise function at the running velocity used during execution of the fourth operation, without causing the display unit to display the cruising velocity setting screen.

According to one aspect of the present disclosure, it is possible to easily execute the cruise function at the running velocity by performing the fourth operation.

In a case where an operation is simultaneously performed on the first switch and a third switch provided on the operating unit, the control unit according to one aspect of the present disclosure executes the cruise function at the velocity associated with the first switch, without causing the display unit to display the cruising velocity setting screen.

According to one aspect of the present disclosure, the cruise function can be executed at the velocity associated with the first switch, without the first switch being operated twice.

In a case where the first operation is performed on the first switch, the control unit according to one aspect of the present disclosure causes the display unit to display the first velocity that has been stored in the storage unit and is associated with the first switch.

According to one aspect of the present disclosure, it is possible to check the velocity previously used during execution of the cruise function, together with the display of the cruising velocity setting screen.

In a case where a predetermined time has passed since the first operation performed on the first switch, or in a case where a switch operation for hiding the cruising velocity setting screen is performed, the control unit according to one aspect of the present disclosure causes the display unit to hide the cruising velocity setting screen.

According to one aspect of the present disclosure, it is possible to prevent the cruising velocity setting screen from remaining displayed.

In a case where the second switch is operated while the cruise function is being executed by an operation on the first switch, the control unit according to one aspect of the present disclosure changes the velocity of the cruise function being executed by the operation on the first switch, to the velocity of the cruise function to be executed by the operation on the second switch.

According to one aspect of the present disclosure, it is possible to easily switch the velocity to be reproduced in the cruise function.

In a case where switching between forward movement and backward movement is performed during execution of the cruise function, the control unit according to one aspect of the present disclosure continues the cruise function, and causes the working vehicle to run at the set velocity.

According to one aspect of the present disclosure, the cruise function can be continued at the set velocity even in a case where switching between forward movement and backward movement is performed.

In a case where an operation for a velocity change is performed with a transmission operating tool for changing the velocity of the working vehicle during execution of the cruise function, the control unit according to one aspect of the present disclosure continues the cruise function, and causes the working vehicle to run at the set velocity.

According to one aspect of the present disclosure, the cruise function can be continued even in a case where an operation for a velocity change using a transmission operating tool is performed during execution of the cruise function.

The display unit according to one aspect of the present disclosure constitutes a meter panel that displays the velocity of the working vehicle that is running, and the control unit causes the display unit to display the set velocity of the cruise function only in a case where an operation is performed on the first switch or the second switch.

According to one aspect of the present disclosure, the set velocity of the cruise function can be displayed on the meter panel only when the display is necessary.

According to one aspect of the present disclosure, it is possible to increase operability in setting the cruise function.

### BRIEF DESCRIPTION OF DRAWINGS

Fig. 1 is a side view showing the overall configuration of a tractor according to an embodiment of the present disclosure;
Fig. 2A is a block diagram showing an operating lever, a meter panel, and a control device of the tractor; Fig. 2B is a plan view of the operating lever;
Fig. 3 is a front view of the meter panel;
Fig. 4 is a front view of an example of a display unit of a cruise cancellation screen;
Fig. 5A is a front view of a cruising velocity setting screen in a case where a cruise-A switch is operated; Fig. 5B is a front view of a cruising velocity reproduction screen in a case where the cruise-A switch is operated;
Fig. 6A is a front view of the cruising velocity setting screen in a case where a cruise-B switch is operated; Fig. 6B is a front view of the cruising velocity reproduction screen in a case where the cruise-B switch is operated; and
Fig. 7 is a table showing a plurality of types of cruising velocities defined by the respective conditions of the vehicle velocity range, the moving direction, and switch assignment.

### DESCRIPTION OF EMBODIMENT

In the following description, directions indicated by an arrow U, an arrow D, an arrow F, an arrow B, an arrow L, and an arrow R in the drawings are defined as an upward direction, a downward direction, a frontward direction, a backward direction, a leftward direction, and a rightward direction, respectively.

First, the overall configuration of a tractor 1 according to an aspect of the present disclosure is described.

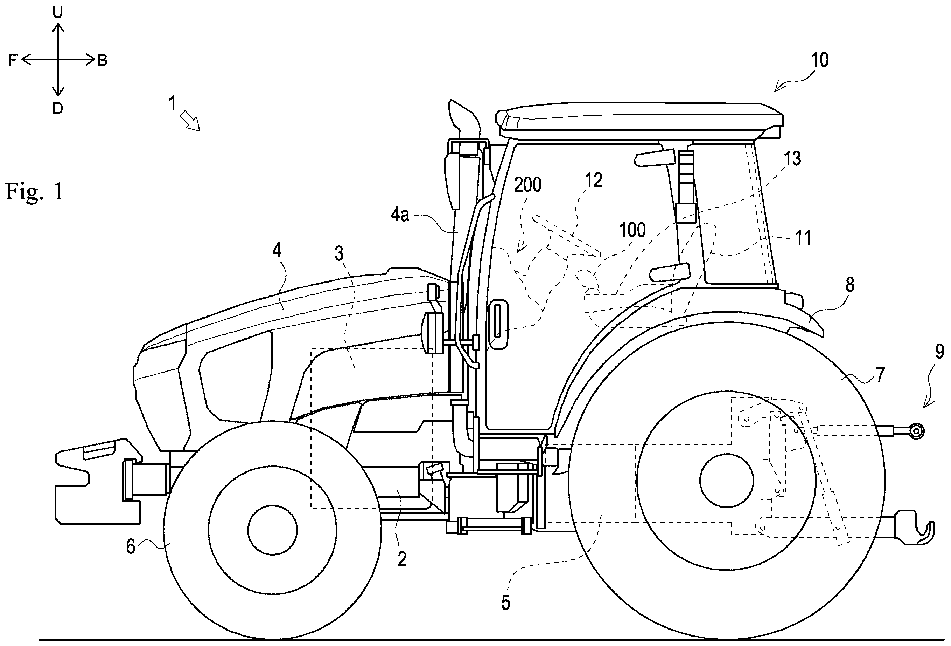

The tractor 1 shown in Fig. 1 mainly includes a machine body frame 2, an engine 3, a hood 4, a transmission casing 5, front wheels 6, rear wheels 7, a fender 8, a lifting device 9, a cabin 10, a seat 11, a steering wheel 12, and the like.

The machine body frame 2 is a frame-like member formed by appropriately combining a plurality of panel members. The machine body frame 2 is formed in a substantially rectangular shape in a planar view. The machine body frame 2 is disposed in a front portion of the tractor 1, with its longitudinal direction oriented in the front-back direction. The engine 3 is fixed to a rear portion of the machine body frame 2. The engine 3 is covered with the hood 4. A muffler 4a that discharges exhaust gas from the engine 3 is disposed on the right side of the hood 4.

The transmission casing 5 is fixed to a rear portion of the engine 3. The front portion of the machine body frame 2 is supported by the pair of left and right front wheels 6 through a front axle mechanism (not shown). The rear portion of the transmission casing 5 is supported by the pair of left and right rear wheels 7 through a rear axle mechanism (not shown). The pair of left and right rear wheels 7 is covered with the fender 8 substantially from above.

The lifting device 9 is provided at the rear portion of the transmission casing 5. Various working devices (such as a cultivator, for example) can be attached to the lifting device 9. The lifting device 9 can lift up and down an attached working device with an actuator such as a hydraulic cylinder. Power of the engine 3 can be transmitted to a working device attached to the lifting device 9 through a power take-off (PTO) shaft (not shown).

Power of the engine 3 can be transmitted to the front wheels 6 via the front axle mechanism and be transmitted to the rear wheels 7 via the rear axle mechanism, after being shifted by a transmission (not shown) housed in the transmission casing 5. The front wheels 6 and the rear wheels 7 are rotationally driven by the power of the engine 3, so that the tractor 1 can move. Also, the working device attached to the lifting device 9 can be driven by the power of the engine 3.

The cabin 10 is provided behind the engine 3. The cabin 10 is placed on a vehicle body (such as the transmission casing 5). The living space the driver gets in is formed inside the cabin 10. In the living space, the seat 11 on which the driver sits, and the steering wheel 12 for adjusting the turning angle of the front wheels 6 are disposed. Also, in the living space, various operating tools such as a shuttle lever for switching the moving direction of the tractor 1, an accelerator lever and an accelerator pedal for causing the tractor 1 to move at a desired velocity are disposed. The operating tools are provided in consoles (not shown) disposed on both left and right sides of the seat 11 in the living space in the cabin 10, for example.

Further, an armrest 13 in which operating units (switches, a lever, and the like) for performing various operations related to the operation of the tractor 1 are disposed is provided in the living space in the cabin 10. The armrest 13 is provided on the right-side console, for example. An operating lever 100 with which various operations related to running of the tractor 1 can be performed is provided on the armrest 13. Also, a meter panel 200 capable of displaying various kinds of information is provided in the cabin 10. Note that the operating lever 100 and the meter panel 200 will be described later in detail.

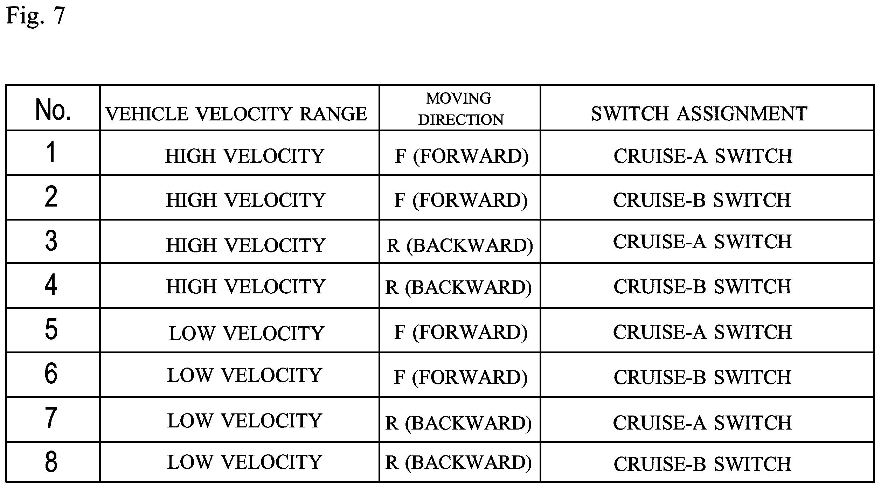

By performing operations using the operating lever 100, the driver can switch the moving direction (forward or backward) of the tractor 1 and change the running velocity using the transmission in the transmission casing 5. Here, "vehicle velocity ranges" indicating ranges of running velocities at a plurality of levels are set in the tractor 1. The vehicle velocity ranges of the tractor 1 according to the present embodiment include the two ranges of a "high velocity range" and a "low velocity range" (see Fig. 7).

The high velocity range is the higher velocity range of the vehicle velocity ranges. As the high velocity range, a range of running velocities suitable for causing the tractor 1 to travel on a road can be adopted, for example. The low velocity range is the lower velocity range of the vehicle velocity ranges. As the low velocity range, a range of running velocities suitable for causing the tractor 1 to run in a field can be adopted, for example. In a case where the vehicle velocity ranges are set, the driver can shift the tractor 1 within the vehicle velocity ranges by operating the transmission using the operating lever 100. Also, the driver can cause the tractor 1 to run at a desired velocity by operating the accelerator lever or the accelerator pedal.

Further, the tractor 1 according to the present embodiment has a cruise function to automatically run at a preset velocity. In the present embodiment, running velocities (cruising velocities) that are set in the cruise function can be assigned to two types of switches that are provided on the operating lever 100 and are a cruise-A switch 110 and a cruise-B switch 120 described later. Hereinafter, the cruising velocity assigned to the cruise-A switch 110 will be referred to as the "cruise-A running velocity", and the cruising velocity assigned to the cruise-B switch 120 will be referred to as the "cruise-B running velocity".

The table in Fig. 7 shows an example of the cruising velocities that are set in the present embodiment. In the present embodiment, the cruising velocities (the cruise-A running velocity and the cruise-B running velocity) assigned to the two types of switches can be set in the respective moving directions (forward and backward). Furthermore, in the present embodiment, the cruising velocities for the respective moving directions can be set within the respective vehicle velocity ranges (the high velocity range and the low velocity range). That is, in the present embodiment, eight types of cruising velocities (the cruising velocities indicated by NO. 1 to NO. 8 shown in Fig. 7) defined by the respective conditions that are switch assignment, moving directions, and vehicle velocity ranges can be set.

The tractor 1 according to the present embodiment can perform various settings related to the above cruise function and execute the cruise function, using the operating lever 100 and the meter panel 200. The cruise function is executed by a control device 300 provided in the tractor 1. In the description below, configurations of the operating lever 100, the meter panel 200, and the control device 300 are described.

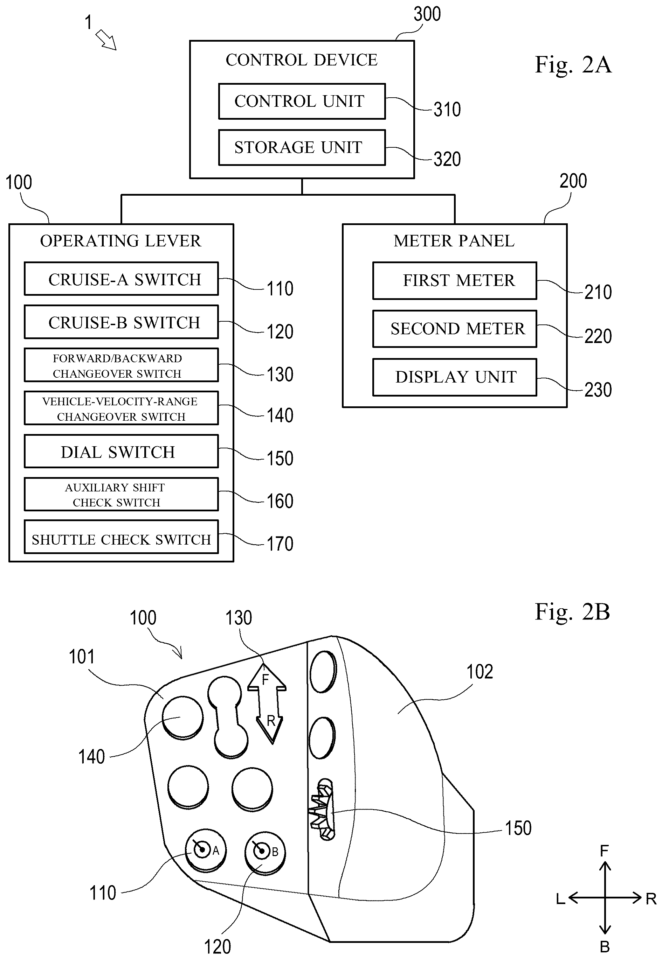

The operating lever 100 shown in Figs. 1 and 2 performs various operations including changing the running velocity of the tractor 1. The operating lever 100 is disposed on the front end side of the armrest 13 (see Fig. 1). The operating lever 100 is provided rotatably in the front-back direction with respect to the armrest 13.

Fig. 2B illustrates an upper portion of the operating lever 100, which is the portion where an operation is performed with the driver's fingers. The upper portion of the operating lever 100 includes an operating surface portion 101 and a grip portion 102. The operating surface portion 101 is the portion constituting the left side of the upper portion of the operating lever 100. Various switches described later are disposed on the upper surface of the operating surface portion 101. The grip portion 102 is the portion that constitutes the right side of the upper portion of the operating lever 100, and is to be gripped by the driver. The grip portion 102 is formed so as to protrude upward with respect to the operating surface portion 101.

As illustrated in Figs. 2A and 2B, various switches for performing various operations are provided on the operating surface portion 101 and the grip portion 102. The various switches include the cruise-A switch 110, the cruise-B switch 120, a forward/backward changeover switch 130, a vehicle-velocity-range changeover switch 140, a dial switch 150, an auxiliary transmission check switch 160, and a shuttle check switch 170.

With the cruise-A switch 110, it is possible to perform an operation related to the cruise-A running velocity. Note that operations using the cruise-A switch 110 will be described later in detail. The cruise-A switch 110 is formed so as to be pressed. As illustrated in Fig. 2B, the cruise-A switch 110 is disposed on a lower portion of the upper surface of the operating surface portion 101 of the operating lever 100.

With the cruise-B switch 120, it is possible to perform an operation related to the cruise-B running velocity. Note that operations using the cruise-B switch 120 will be described later in detail. The cruise-B switch 120 is formed so as to be pressed. The cruise-B switch 120 is disposed on the right side of the cruise-A switch 110 on the upper surface of the operating surface portion 101 of the operating lever 100.

With the forward/backward changeover switch 130, it is possible to perform an operation of switching the tractor 1 between forward movement and backward movement. More specifically, the driver can switch the tractor 1 between forward movement and backward movement, by operating the forward/backward changeover switch 130 while operating the shuttle check switch 170 described later. In the present embodiment, a rocker switch (seesaw switch) is adopted as the forward/backward changeover switch 130. The forward/backward changeover switch 130 is disposed on the front side of the upper surface of the operating surface portion 101.

With the vehicle-velocity-range changeover switch 140, it is possible to perform an operation of switching vehicle velocity ranges of the tractor 1. The vehicle-velocity-range changeover switch 140 is formed so as to be pressed. The driver can switch between running in the high velocity range and running in the low velocity range by operating the vehicle-velocity-range changeover switch 140. The driver can change the running velocity of the tractor 1 within each vehicle velocity range, by operating an auxiliary transmission and a main transmission using an operating tool (the operating lever 100, for example) related to shifting. The vehicle-velocity-range changeover switch 140 is disposed on the left side of the forward/backward changeover switch 130 on the upper surface of the operating surface portion 101.

With the dial switch 150, it is possible to perform an operation of setting a cruising velocity (the cruise-A running velocity or the cruise-B running velocity). The dial switch 150 is formed to be rotatable. The dial switch 150 is disposed on the left-side surface of the grip portion 102. The driver can increase or decrease the set value of the cruising velocity by rotating the dial switch 150 in one direction or the other. Note that the running velocity setting using the dial switch 150 will be described later in detail.

The auxiliary transmission check switch 160 shown in Fig. 2A is used for operating the auxiliary transmission. The auxiliary transmission check switch 160 is formed so as to be pressed. Although not shown in Fig. 2B, the auxiliary transmission check switch 160 is disposed at a predetermined position (the front side surface, for example) of the grip portion 102. The driver can operate the transmission (auxiliary transmission) in the transmission casing 5 by rotationally moving the operating lever 100 in the front-back direction while pressing the auxiliary transmission check switch 160, and thus, change the running velocity of the tractor 1.

The shuttle check switch 170 shown in Fig. 2A is used for an operation of switching the tractor 1 between forward movement and backward movement, using the forward/backward changeover switch 130. The shuttle check switch 170 is formed so as to be pressed. Although not shown in Fig. 2B, the shuttle check switch 170 is disposed at a predetermined position (the lower surface, for example) of the grip portion 102. The driver can switch the tractor 1 between forward movement and backward movement, by operating the forward/backward changeover switch 130 while pressing the shuttle check switch 170.

The above is a description of various switches. Note that the functions and positions of the various switches described above are merely an example, and the switches provided on the operating lever 100 are not limited to the above example. For example, various switches such as a pump switch for changing the vertical position (the height of the three-point link) of the lifting device 9, a switch for performing a hydraulic pressure control operation on a working device, a switch for operating the main transmission in the transmission casing 5, and a switch for setting the speed of the engine 3 can be disposed on the operating lever 100.

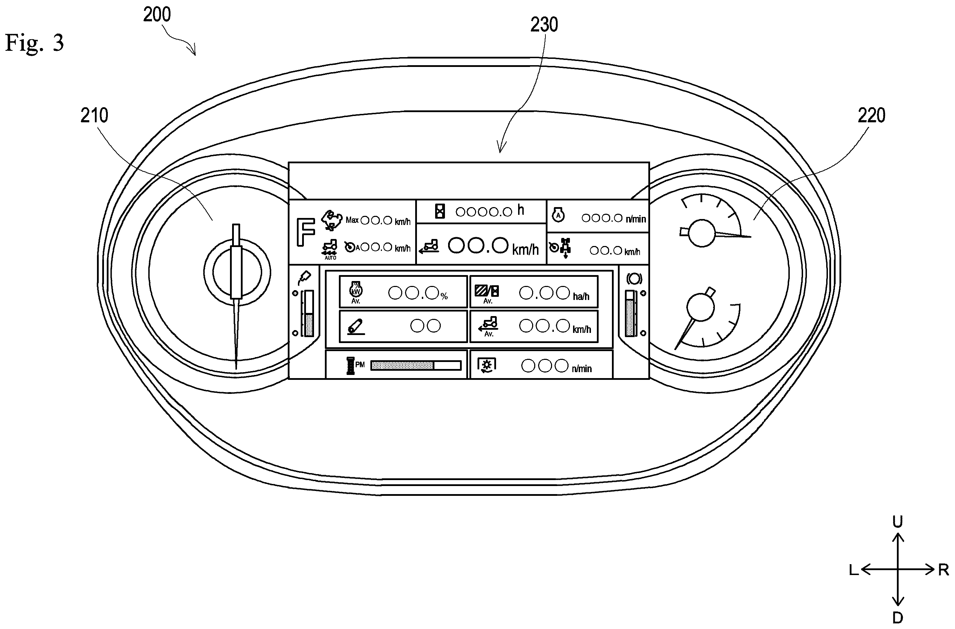

The meter panel 200 shown in Fig. 3 indicates various kinds of information regarding the operation of the tractor 1, such as the running velocity of the tractor 1 and the speed of the engine 3. The meter panel 200 is disposed in the cabin 10 at a position that faces the seat 11 and is easily visible from the driver sitting in the seat 11. The meter panel 200 is supported by a stay (not shown) that supports the steering wheel 12. The meter panel 200 includes a first meter 210, a second meter 220, and a display unit 230.

The first meter 210 constitutes the left portion of the meter panel 200. In the present embodiment, the first meter 210 indicates the speed of the engine 3. The first meter 210 constitutes an analog meter that indicates the speed of the engine 3 with the direction of an indicator needle.

The second meter 220 constitutes the right portion of the meter panel 200. In the present embodiment, the second meter 220 indicates the remaining fuel amount and the temperature (water temperature) of the cooling water for the engine 3. The second meter 220 constitutes an analog meter that indicates the remaining fuel amount and the water temperature with the directions of two indicator needles.

Note that the values indicated by the first meter 210 and the second meter 220 are not limited to those described above. As the values indicated by the first meter 210 and the second meter 220, various values related to the operation of the tractor 1 can be adopted.

The display unit 230 constitutes the center of the meter panel 200. The display unit 230 constitutes a display (a digital display) that can display various kinds of information regarding the operation of the tractor 1. As the display unit 230, a liquid crystal display can be adopted, for example. Also, as the display unit 230, one that functions as a touch panel can be adopted. The display unit 230 is formed in a horizontally-long rectangular shape when viewed from the side of the seat 11. Unlike the first meter 210 and the second meter 220 that are analog meters, the display unit 230 can display numbers, characters, figures, icons, symbols, a still image, or a moving image of any desired size at appropriate positions in the display region.

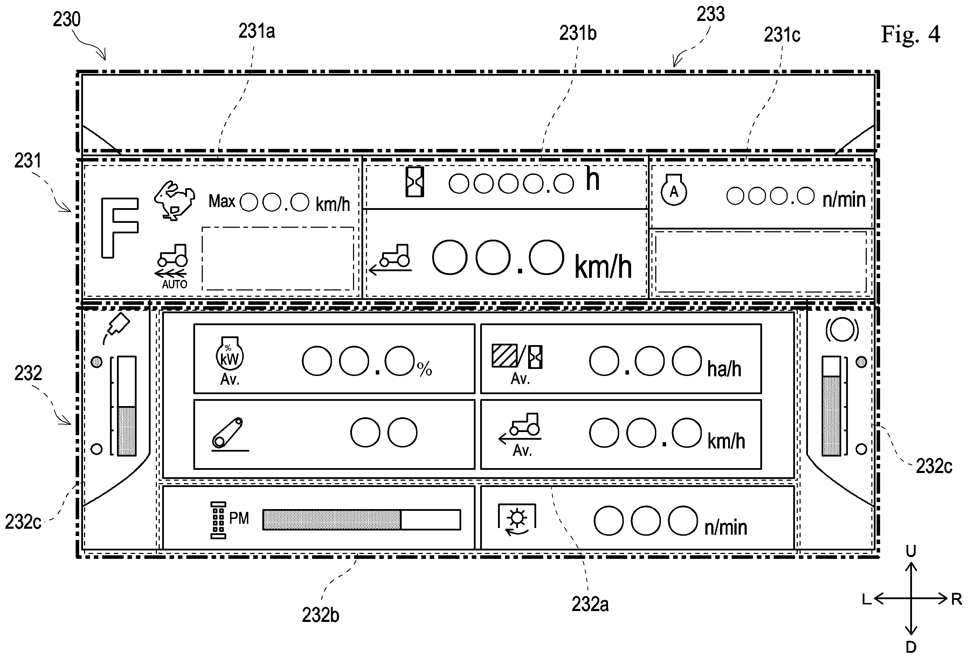

The information displayed on the display unit 230 is changed as appropriate, depending on the state of the tractor 1, an operation by the driver, or the like. Fig. 4 illustrates, as an example, the display unit 230 in a state where execution of the cruise function or an operation related to the cruise function is not being performed (this state will be hereinafter referred to as a "cruise canceled state"). Also, Fig. 4 illustrates the display unit 230 in a state of moving forward at a velocity within the high velocity range.

In the following, the display region of the display unit 230 is described with reference to Fig. 4. The display region of the display unit 230 includes a main region 231, a sub region 232, and an indicator region 233. In the example shown in the drawing, each region is surrounded by a bold double-dot and dash line. Each region is formed in a substantially band-like shape elongated in a horizontal direction.

The main region 231 is a region that can display principal information such as the running velocity and the moving direction of the tractor 1 among the various kinds of information regarding the operation of the tractor 1. The main region 231 is located on the upper side (above the center in a vertical direction) of the entire display region of the display unit 230. The main region 231 is divided in the horizontal direction into three regions: a first main region 231a, a second main region 231b, and a third main region 231c. In Fig. 4, each divided region is surrounded by a broken line.

The first main region 231a is the portion constituting the left portion of the main region 231. In the first main region 231a according to the present embodiment, information such as the moving direction of the tractor 1 is displayed. More specifically, in the first main region 231a, it is possible to display in which state the shuttle lever is in as the moving direction of the tractor 1: a forward (F) state, a backward (R) state, or a neutral (N). In the example shown in the drawing, an image "F" indicating that the tractor 1 is moving forward is displayed on the left side in the first main region 231a.

In the first main region 231a, the vehicle velocity range that is currently set (the high velocity range or the low velocity range) can be displayed. In the present embodiment, the high velocity range is indicated by an image of a rabbit, and the low velocity range is indicated by an image of a turtle. In the example illustrated in the drawing, an image of a rabbit indicating the high velocity range is displayed in an upper portion on the left side in the first main region 231a. Also, the upper limit of the running velocity in the high velocity range (the high velocity range in forward movement) is shown together with the image.

Further, in the first main region 231a, the state of the running mode of the tractor 1 can be displayed. The running mode includes a "4WD mode" in which the tractor 1 always runs by four-wheel drive, and an "auto 4WD mode" in which two-wheel drive and four-wheel drive are automatically switched depending on situations. The drawing illustrates an example in which an image indicating the auto 4WD mode is displayed at a lower portion (below the image of a rabbit) on the right side in the first main region 231a.

In the example illustrated in Fig. 4, information is not displayed in a lower portion on the right side in the first main region 231a and in a region (a region surrounded by a dot-and-dash line) on the right side of the image indicating the running mode. Note that, as will be described later, information regarding the cruise function can be displayed in the region.

The second main region 231b is the portion constituting the central portion of the main region 231. The operating time period of the tractor 1 can be displayed in an upper portion of the second main region 231b. Also, the current running velocity of the tractor 1 can be displayed in a lower portion of the second main region 231b.

The third main region 231c is the portion constituting the right portion of the main region 231. The set speed of the engine 3 can be displayed in an upper portion of the third main region 231c. In the example illustrated in Fig. 4, no information is displayed in the lower region (the region surrounded by a dot-and-dash line) of the third main region 231c. Note that, as will be described later, information regarding the cruise function can be displayed in the region.

The sub region 232 is a region that can display information not displayed in the main region 231 among the various kinds of information regarding the operation of the tractor 1. The sub region 232 is located on the lower side (below the main region 231) in the entire display region of the display unit 230. The sub region 232 is divided into three regions: a first sub region 232a, a second sub region 232b, and a third sub region 232c. In Fig. 4, each divided region is surrounded by a broken line.

The first sub region 232a is the portion constituting an upper portion at the center of the sub region 232 in the horizontal direction. The first sub region 232a occupies a large portion of the sub region 232. In the first sub region 232a, the average load factor of the engine 3, the height of the three-point link, the average work area, and the average velocity of the tractor 1 can be displayed. In the example illustrated in the drawing, the average load factor of the engine 3 is displayed at the upper left of the first sub region 232a, the height of the three-point link is displayed at the lower left, the average work area is displayed at the upper right, and the average velocity is displayed at the lower right.

The second sub region 232b is the portion constituting a lower portion (below the first sub region 232a) at the center of the sub region 232 in the horizontal direction. In the second sub region 232b, the PM deposition amount in a diesel particle matter (DPM) muffler and the rotation rate of a PTO shaft can be displayed. In the example illustrated in the drawing, the PM deposition amount is displayed on the left side in the second sub region 232b, and the rotation rate of the PTO shaft is displayed on the right side.

The third sub region 232c is the portion constituting both end sides in the sub region 232 in the horizontal direction. In the third sub region 232c, long gauge-like images are displayed vertically. As the information indicated by the gauge images, the remaining amounts of a urea solution or a diesel exhaust fluid (DEF), and air pressure can be adopted, for example.

The indicator region 233 is a region that can display warning and maintenance-related information among the various kinds of information regarding the operation of the tractor 1. The indicator region 233 is located above the main region 231. The indicator region 233 can display a brake warning, a warning about the remaining amount of fuel, and information for prompting maintenance such as engine oil replacement, for example.

The above is a description of the respective regions of the display unit 230. Note that the contents and position of each of the regions described above are an example, and the respective regions displayed on the display unit 230 are not limited to those described above. Various pieces of information regarding the tractor 1 can be displayed in the respective regions of the display unit 230.

The control device 300 shown in Fig. 2A can perform various kinds of control related to running of the tractor 1. The control device 300 can be formed with an electronic control unit (ECU). The control device 300 includes a control unit 310 and a storage unit 320.

The control unit 310 can control settings related to the cruise function or execution of the cruise function, on the basis of an operation of the operating lever 100. The control unit 310 can cause the display unit 230 of the meter panel 200 to display information regarding the cruise function.

The storage unit 320 can store various kinds of information. The storage unit 320 can store a cruising velocity that is set with the cruise-A switch 110, the cruise-B switch 120, the dial switch 150, and the like of the operating lever 100.

The above is a description of the configuration of the tractor 1. The following is a description of the control to be performed by the control unit 310 in a case where an operation related to the cruise function of the tractor 1 is performed, with reference to Figs. 4 to 6B.

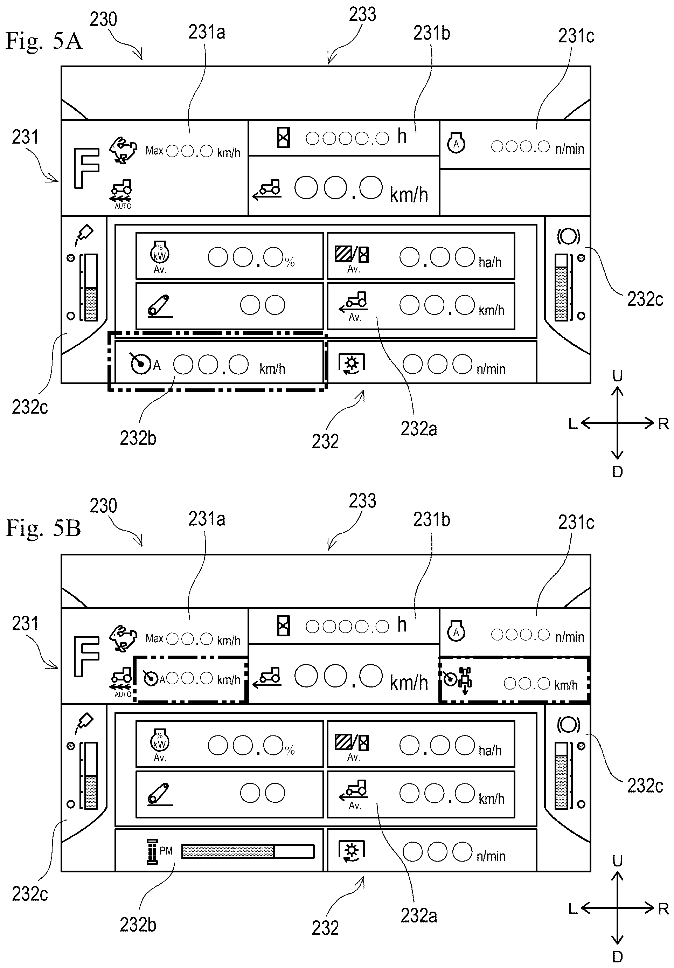

First, an example in which an operation related to the cruise function is performed in a cruise canceled state is described with reference to Figs. 4 and Figs. 5A and 5B. Hereinafter, the screen displayed on the display unit 230 in the cruise canceled state illustrated in Fig. 4 will be referred to as the "cruise cancellation screen".

When a short-pressing operation is performed on the cruise-A switch 110 or the cruise-B switch 120 of the operating lever 100 in the cruise canceled state, the control unit 310 causes the display unit 230 to display a screen on which the cruising velocity can be set (hereinafter, this screen will be referred to as the "cruising velocity setting screen"). Here, the "short-pressing operation" refers to a pressing operation that is shorter than a predetermined period (several seconds, for example).

Fig. 5A illustrates the cruising velocity setting screen that is displayed on the display unit 230 in a case where the short-pressing operation is performed on the cruise-A switch 110. Note that, in the following description of the cruising velocity setting screen, portions different from those of the cruise cancellation screen shown in Fig. 4 are explained, and explanation of contents similar to those of the cruise cancellation screen is omitted as appropriate.

On the cruising velocity setting screen shown in Fig. 5A, the currently set cruising velocity, instead of the information (PM deposition amount) displayed on the cruise cancellation screen, is displayed in the region of the second sub region 232b (the region of the second sub region 232b on the left side surrounded by a bold double-dot and dash line). In the present embodiment, the cruising velocity that has been stored previously (last time) (a cruising velocity that has been set by an operation of a switch to be described later, or a cruising velocity that has been changed by an operation of the dial switch 150) is displayed in the region. The cruising velocity setting screen displays the cruising velocity that is stored and associated with the switch on which the short-pressing operation has been performed. That is, in a case where the short-pressing operation is performed on the cruise-A switch 110 in the cruise canceled state, the cruise-A running velocity is displayed in the region of the cruising velocity setting screen, and, in a case where the short-pressing operation is performed on the cruise-B switch 120, the cruise-B running velocity is displayed in the region.

In the region, the cruising velocity corresponding to the current running conditions (the moving direction and the vehicle velocity range) is displayed. In the example illustrated in Fig. 5A, the cruise-A running velocity (the cruising velocity of NO. 1 shown in Fig. 7) corresponding to the running conditions for the high velocity range and the forward movement is displayed in the region. The region also displays an image from which the type of the displayed cruising velocity (with which switch the cruising velocity is associated) can be identified. In the example illustrated in Fig. 5A, an image (an image including the character "A") from which the displayed cruising velocity can be identified as the cruise-A running velocity is displayed. Note that, in a case where the displayed cruising velocity is the cruise-B running velocity, an image (an image including the character "B") from which the cruising velocity can be identified as the cruise-B running velocity is displayed in the region.

Also, on the cruising velocity setting screen, the display of the cruising velocity can be changed in color or be made to blink as appropriate, so that the cruising velocity can become more conspicuous.

By visually recognizing the screen illustrated in Fig. 5A, the driver can check the cruising velocity that is reproduced in a case where the cruise function is executed. Note that, at this point of time, the cruise function has not been executed yet.

In the tractor 1 according to the present embodiment, it is possible to change the cruising velocity (the cruise-A running velocity) by operating the dial switch 150 while the cruising velocity setting screen shown in Fig. 5A is displayed. More specifically, in conjunction with a rotating operation of the dial switch 150, the control unit 310 changes the value of the cruising velocity displayed on the cruising velocity setting screen. At this point of time, the control unit 310 increases the value of the cruising velocity depending on the amount of rotation of the dial switch 150 in one direction, and decreases the value of the cruising velocity depending on the amount of rotation in the other direction.

In a case where the same operation (the short-pressing operation on the cruise-A switch 110) as the operation for displaying the cruising velocity setting screen is performed while the cruising velocity setting screen shown in Fig. 5A is displayed, the control unit 310 causes the storage unit 320 to store the cruising velocity displayed on the cruising velocity setting screen at the time of the operation. At this point of time, the control unit 310 causes the storage unit 320 to store the cruising velocity displayed on the cruising velocity setting screen at the time when the operation has been performed, and associate the cruising velocity with the running conditions (the moving direction and the vehicle velocity range) at that point of time and the switch on which the operation has been performed. In the example shown in Fig. 5A, the control unit 310 causes the storage unit 320 to store the cruising velocity displayed on the cruising velocity setting screen (as the cruising velocity of NO. 1 shown in Fig. 7) and associate the cruising velocity with the conditions that are the high velocity range, the forward movement, and the cruise-A switch 110.

Here, in a case where the cruising velocity is changed with the use of the dial switch 150 on the cruising velocity setting screen, the changed cruising velocity is stored. In this manner, the setting of the cruising velocity is completed. The control unit 310 also reproduces the stored cruising velocity. As a result, the tractor 1 runs at the set cruising velocity (the cruising velocity of NO. 1 shown in Fig. 7).

Further, the control unit 310 causes the display unit 230 to display a screen indicating the cruising velocity being reproduced (this screen will be hereinafter referred to as the "cruising velocity reproduction screen"). On the cruising velocity reproduction screen shown in Fig. 5B, the information about the cruising velocity displayed in the second sub region 232b is switched to the information (PM deposition amount) displayed on the cruise cancellation screen. On the cruising velocity reproduction screen, the currently reproduced cruising velocity (the cruise-A running velocity in the example in the drawing) is displayed in the lower right region of the first main region 231a, which is the region on the right side of the image indicating the running mode (the region surrounded by a bold double-dot and dash line).

In addition, on the cruising velocity reproduction screen, the cruising velocity in a moving direction opposite to the current moving direction is displayed in a lower region of the third main region 231c (the region surrounded by a bold double-dot and dash line). More specifically, among the respective conditions (switch assignment, the vehicle velocity range, and the moving direction) for the cruising velocity currently being reproduced, the cruising velocity having only the moving direction changed is displayed in the region. In the example shown in Fig. 5B, the cruise-A running velocity (the cruising velocity of NO. 3 shown in Fig. 7) corresponding to the running conditions that are the high velocity range and the backward movement is displayed in the region.

Further, in a case where a period during which the switches related to the cruise function (the cruise-A switch 110, the cruise-B switch 120, and the dial switch 150 in the present embodiment) are not operated continues for a predetermined period (three seconds, for example) or longer while the cruising velocity setting screen is displayed, the control unit 310 hides the cruising velocity setting screen, and switches the screen to the cruise cancellation screen. Also, in a case where a check switch (the auxiliary transmission check switch 160 or the shuttle check switch 170) of the operating lever 100 is operated while the cruising velocity setting screen is displayed, the control unit 310 hides the cruising velocity setting screen, and switches the screen to the cruise cancellation screen. With the configuration, it is possible to hide the cruising velocity setting screen, without waiting for the predetermined period of time to pass.

Also, in a case where a switch (the cruise-A switch 110 or the cruise-B switch 120) associated with the cruising velocity and a check switch (the auxiliary transmission check switch 160 or the shuttle check switch 170) are simultaneously operated in the cruise canceled state, the control unit 310 can reproduce the cruising velocity (the cruise-A running velocity or the cruise-B running velocity) associated with the switches, without having the cruising velocity setting screen displayed. At this point of time, the cruising velocity that corresponds to the current running conditions (the moving direction and the vehicle velocity range), and is the currently set cruising velocity (stored in the storage unit 320) is reproduced.

Further, in a case where an operation on a switch (a short-pressing operation on the cruise-B switch 120) different from the switch (the cruise-A switch 110, for example) with which the cruising velocity setting screen has been displayed is operated while the cruising velocity setting screen is still displayed, the control unit 310 can display the cruising velocity setting screen for the cruising velocity (cruise-B running velocity) corresponding to the switch operated while the cruising velocity setting screen is still displayed.

In this manner, when executing the cruise function in the cruise canceled state, the tractor 1 according to the present embodiment can execute the cruise function, after checking or setting the cruising velocity on the cruising velocity setting screen.

Next, an example in which the cruise function is executed in the cruise canceled state without the cruising velocity setting screen displayed is described. In a case where a long-pressing operation is performed on the switch (the cruise-A switch 110 or the cruise-B switch 120) associated with the cruising velocity in the cruise canceled state, the control unit 310 can set the cruising velocity by storing the current running velocity into the storage unit 320, with the current running velocity being associated with the current running conditions (the moving direction and the vehicle velocity range) and the pressed switch. Here, the "long-pressing operation" refers to a pressing operation that lasts for a predetermined period (several seconds, for example) or longer. Also, the control unit 310 reproduces the set cruising velocity, and causes the display unit 230 to display the cruising velocity reproduction screen shown in Fig. 5B. With the configuration, the setting and the reproduction of the cruising velocity can be performed by a single pressing operation.

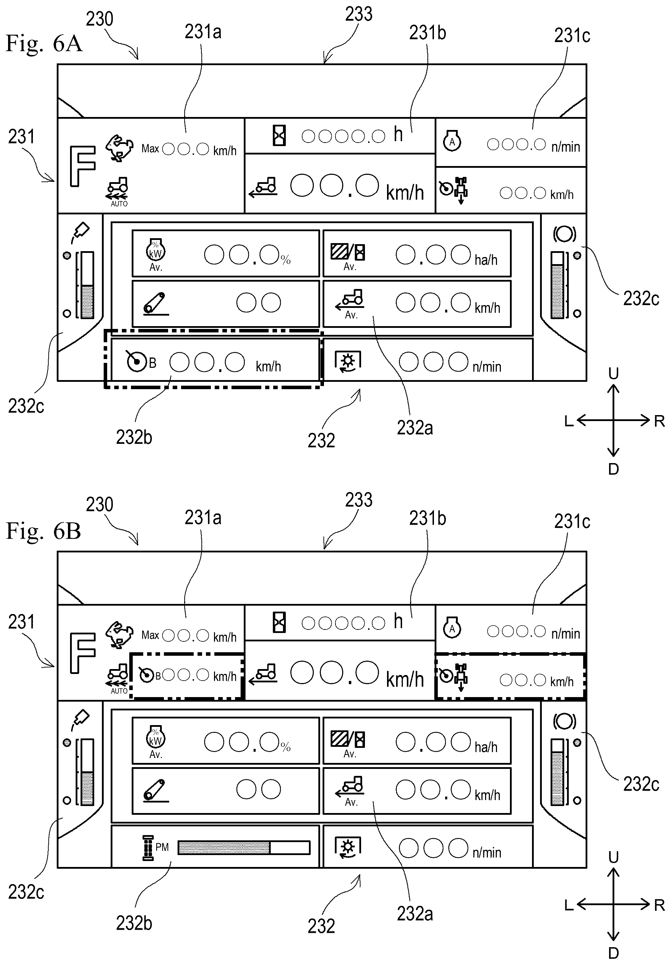

Next, referring to Figs. 5A and 5B, and Figs. 6A and 6B, an example in which setting of the other running velocity (the cruise-B running velocity) and reproduction of the cruise-B running velocity are performed in a state where the cruise function is being executed at one cruising velocity (the cruise-A running velocity, for example) is described.

In a case where a short-pressing operation is performed on the switch associated with the other cruising velocity while the cruising velocity reproduction screen indicating the one cruising velocity is displayed, the control unit 310 switches the cruising velocity reproduction screen displayed on the display unit 230 to the cruising velocity setting screen indicating the other cruising velocity. The cruising velocity setting screen displays the cruising velocity corresponding to the running conditions (the vehicle velocity range and the moving direction) currently being reproduced, which is the cruising velocity corresponding to the switch on which the short-pressing operation has been performed.

Specifically, in a case where the short-pressing operation is performed on the cruise-B switch 120 while the cruising velocity reproduction screen for the cruise-A running velocity shown in Fig. 5B is displayed, the control unit 310 switches the display on the display unit 230 to the cruising velocity setting screen for the cruise-B running velocity shown in Fig. 6A. Note that, at this point of time, the cruise-A running velocity shown in Fig. 5B continues to be reproduced. By visually recognizing the cruising velocity setting screen shown in Fig. 6A, the driver can check the cruising velocity having different switch assignment from that of the cruising velocity currently being reproduced.

In a case where the cruising velocity reproduction screen is displayed, the cruise-B running velocity can be set with the use of the dial switch 150 as described above. Further, in a case where a period during which the dial switch 150 is not operated continues for a predetermined period or longer, or in a case where a check switch (the auxiliary transmission check switch 160 or the shuttle check switch 170) is operated, the control unit 310 hides the cruising velocity setting screen, and switches the screen to the cruise cancellation screen.

In a case where the same switch operation (the short-pressing operation on the cruise-B switch 120) as the operation for displaying the cruising velocity setting screen is performed while the cruising velocity setting screen shown in Fig. 6A is displayed, the control unit 310 causes the storage unit 320 to store the cruising velocity displayed on the cruising velocity setting screen at the time of the operation. In this manner, the setting of the cruising velocity is completed. Also, the control unit 310 reproduces the set cruising velocity (the cruise-B running velocity), and causes the display unit 230 to display the cruising velocity reproduction screen indicating the cruising velocity.

As described above, in the tractor 1 according to the present embodiment, even in a state where the cruise function is being executed at one cruising velocity (the cruise-A running velocity), it is possible to check and set the other cruising velocity (the cruise-B running velocity) on the cruising velocity setting screen.

Next, an example in which, in a state where the cruise function is being executed at one cruising velocity, the other cruising velocity starts to be reproduced without the cruising velocity setting screen displayed is described. In a case where the long-pressing operation is performed on the switch (the cruise-B switch 120) associated with the other cruising velocity while the cruising velocity reproduction screen showing the one cruising velocity (the cruising velocity reproduction screen for the cruise-A running velocity shown in Fig. 5B, for example) is displayed, the control unit 310 can store the current running velocity into the storage unit 320, the current running velocity being associated with the current running conditions (the moving direction and the vehicle velocity range) and the pressed switch. In this case, the control unit 310 sets the stored running velocity as the other cruising velocity (the cruise-B running velocity), and reproduces the other cruising velocity. With the configuration, the setting and the reproduction of the cruising velocity (the cruise-B running velocity) having different switch assignment from that of the cruising velocity (the cruise-A running velocity) currently being reproduced can be performed by a single pressing operation.

Note that, in the example described above, in a case where the long-pressing operation is performed on the switch (the cruise-B switch 120) associated with the other cruising velocity, the current running velocity is set as the other cruising velocity (the cruise-B running velocity). However, the present invention is not limited to the above mode. For example, in a case where the long-pressing operation is performed on the switch (the cruise-B switch 120) associated with the other cruising velocity, it is also possible to reproduce the other cruising velocity that is the cruising velocity corresponding to the current running conditions, and has already been set (the cruise-B running velocity reproduced last time, for example).

Further, in the description with reference to Figs. 6A and 6B, an example in which the cruise-B running velocity starts to be reproduced in the state where the cruise-A running velocity is being reproduced has been described. However, the cruise-A running velocity can start to be reproduced in a state where the cruise-B running velocity is being reproduced. In this case, the long-pressing operation is performed on the cruise-A switch 110 while the cruise-B running velocity is being reproduced, so that the cruise-A running velocity can be reproduced.

Also, in a case where the moving direction or the vehicle velocity range of the tractor 1 is changed during execution of the cruise function, the tractor 1 according to the present embodiment can continue the cruise function. In the following, the control to be performed in a case where the moving direction and the vehicle velocity range of the tractor 1 are changed during execution of the cruise function is described.

First, the control to be performed in a case where the moving direction of the tractor 1 is changed during execution of the cruise function is described. In the tractor 1 according to the present embodiment, in a case where the moving direction that is set during execution of the cruise function is changed to another direction, the cruise function can be continued at the cruising velocity having only the moving direction changed among the conditions (switch assignment, the vehicle velocity range, and the moving direction) for the cruising velocity currently being reproduced.

Specifically, on the cruising velocity reproduction screen in Fig. 5B, the cruise-A running velocity (the cruising velocity of NO. 1 shown in Fig. 7) corresponding to the running conditions for moving forward in the high velocity range is reproduced. In a case where the moving direction is changed from forward to backward while the cruising velocity reproduction screen is displayed, the control unit 310 reproduces the cruise-A running velocity (the cruising velocity of NO. 3 shown in Fig. 7) corresponding to the running conditions for backward movement in the high velocity range. That is, at this point of time, the control unit 310 reproduces the cruising velocity for backward movement displayed in a lower region (the region surrounded by a bold double-dot and dash line) of the third main region 231c on the cruising velocity reproduction screen.

Next, the control to be performed in a case where the vehicle velocity range of the tractor 1 is changed during execution of the cruise function is described. In the tractor 1 according to the present embodiment, in a case where the vehicle velocity range that is set during execution of the cruise function is changed to another vehicle velocity range, the cruise function can be continued at the cruising velocity having only the vehicle velocity range changed among the respective conditions (switch assignment, the vehicle velocity range, and the moving direction) for the cruising velocity currently being reproduced.

Specifically, in a case where the vehicle-velocity-range changeover switch 140 is operated while the cruise function is being executed at the cruise-A running velocity (the cruising velocity of NO. 1 shown in Fig. 7) corresponding to the running conditions for forward movement in a certain vehicle velocity range (the high velocity range, for example), the control unit 310 displays the cruising velocity setting screen showing the cruise-A running velocity (the cruising velocity of NO. 5 shown in Fig. 7) corresponding to the running conditions for forward movement in the changed vehicle velocity range (the low velocity range) (as the changeover destination). In a case where an operation for changing the vehicle velocity range (an operation of the vehicle-velocity-range changeover switch 140, for example) is performed while the cruising velocity setting screen is displayed, the control unit 310 can reproduce the changed cruising velocity (the cruising velocity of NO. 5 shown in Fig. 7). Note that it is possible to reproduce the cruise-A running velocity, using another operation (an operation of a switch associated with the cruising velocity, for example) as a trigger, instead of the operation for changing the vehicle velocity range.

Further, in a case where the vehicle-velocity-range changeover switch 140 and a check switch (the auxiliary transmission check switch 160 or the shuttle check switch 170) are operated at the same time while the cruise function is being executed at the cruising velocity in a certain vehicle velocity range (the high velocity range, for example), the control unit 310 can reproduce the cruising velocity having only its vehicle velocity range changed to the changed vehicle velocity range (the low velocity range) among the conditions (switch assignment, the vehicle velocity range, and the moving direction) for the cruising velocity currently being reproduced, without having the cruising velocity setting screen displayed.

With the configuration, even in a case where the moving direction or the vehicle velocity range of the tractor 1 is changed during execution of the cruise function, the cruise function can be continued in the changed mode without having any particular operation performed for the cruise function, and thus, operability can be increased.

The control related to the cruise function of the tractor 1 has been described so far. Note that the mode of control related to the cruise function is not limited to the above example, and can be changed as appropriate.

For example, in the example described above, two types of cruising velocities (the cruise-A running velocity and the cruise-B running velocity) are associated with the switches (the cruise-A switch 110 and the cruise-B switch 120). However, the cruising velocities may be set to one type, or three or more types. Also, in the example described above, the vehicle velocity ranges are the two levels of the high velocity range and the low velocity range. However, the vehicle velocity ranges can be set to three or more levels.

Further, in the example described above, only the cruising velocity (the cruise-A running velocity in a case where the cruise-A switch 110 is pressed) corresponding to the pressed switch is displayed on the cruising velocity setting screen or the cruising velocity reproduction screen. However, the disclosure is not limited to the above mode. For example, it is also possible to adopt a configuration in which both the cruise-A running velocity and the cruise-B running velocity are displayed on the cruising velocity setting screen and the cruising velocity reproduction screen. With the configuration, the driver can check both the cruise-A running velocity and the cruise-B running velocity.

In a case where the configuration for displaying both of the cruising velocities is adopted, it is possible to perform control to display both the cruise-A running velocity and the cruise-B running velocity when the switch (the cruise-A switch 110, for example) related to the cruise function is short-pressed for the first time after the tractor 1 is operated, and to reproduce the cruising velocity (the cruise-A running velocity) corresponding to the pressed switch when the switch (the cruise-A switch 110, for example) associated with the cruising velocity is short-pressed during the velocity display, for example.

Also, in the above configuration, in a case where a switch related to the cruise function is short-pressed in a cruise canceled state after the second or later operation of the tractor 1, it is possible to perform control to reproduce the cruising velocity corresponding to the pressed switch, without having the cruising velocity displayed. In this case, when a short-pressing operation is performed on the switch (the cruise-B switch 120) corresponding to the other cruising velocity during reproduction of one cruising velocity (the cruise-A running velocity, for example), it is possible to perform control to reproduce the cruising velocity (the cruise-B running velocity) corresponding to the switch, without having the cruising velocity displayed.

As described above, a tractor (a working vehicle) according to the present embodiment is the tractor 1 having a cruise function for automatically running at a set velocity, and includes:
the control unit 310 capable of executing the cruise function;
the operating lever 100 (an operating unit) having the cruise-A switch 110 (a first switch) for performing an operation related to the cruise function;
the display unit 230 capable of displaying a cruising velocity setting screen on which the velocity to be used during execution of the cruise function can be set; and
the storage unit 320 capable of storing the velocity to be used during execution of the cruise function.

In a case where a short-pressing operation (a first operation) is performed on the cruise-A switch 110, the control unit 310 causes the display unit 230 to display the cruising velocity setting screen, and causes the storage unit 320 to store the cruise-A running velocity (a first velocity) set on the cruising velocity setting screen, the cruise-A running velocity being associated with the cruise-A switch 110.

In a case where the cruise-A switch 110 is operated while the cruising velocity setting screen is displayed, the control unit 310 executes the cruise function at the cruise-A running velocity.

With such a configuration, operability in setting the cruise function can be increased. That is, it is possible to execute the cruise function after having the cruising velocity setting screen displayed and setting the cruise-A running velocity (checking or resetting the cruise-A running velocity, for example) to be reproduced in the cruise function. Thus, operability in setting the cruise function can be increased.

Further, in a case where a long-pressing operation (a second operation) different from the short-pressing operation is performed on the cruise-A switch 110,
the control unit 310 causes the storage unit 320 to store the running velocity used during execution of the long-pressing operation, the running velocity being associated with the cruise-A switch 110, and executes the cruise function at the running velocity used during execution of the long-pressing operation, without causing the display unit 230 to display the cruising velocity setting screen.

With such a configuration, the cruise function can be easily executed at the running velocity by performing the long-pressing operation.

Also, in a case where a short-pressing operation (a third operation) is performed on the cruise-B switch 120 (a second switch) provided on the operating lever 100,
the control unit 310 causes the display unit 230 to display the cruising velocity setting screen, causes the storage unit 320 to store the cruise-B running velocity (a second velocity) that has been set on the cruising velocity setting screen and is different from the cruise-A running velocity, the cruise-B running velocity being associated with the cruise-B switch 120, and executes the cruise function at the cruise-B running velocity when the cruise-B switch 120 is operated while the cruising velocity setting screen is displayed.

With such a configuration, it is possible to execute the cruise function after checking or resetting the cruise-B running velocity to be reproduced in the cruise function.

Further, in a case where a long-pressing operation (a fourth operation) is performed on the cruise-B switch 120 provided on the operating lever 100,
the control unit 310 causes the storage unit 320 to store the running velocity used during execution of the long-pressing operation, the running velocity being associated with the cruise-B switch 120, and executes the cruise function at the running velocity used during execution of the long-pressing operation, without causing the display unit 230 to display the cruising velocity setting screen.

With such a configuration, the cruise function can be easily executed at the running velocity by performing the long-pressing operation.

Further, in a case where the cruise-A switch 110, and the auxiliary transmission check switch 160 or the shuttle check switch 170 (a third switch) provided on the operating lever 100 are simultaneously operated,
the control unit 310 does not cause the display unit 230 to display the cruising velocity setting screen, but executes the cruise function at the velocity associated with the cruise-A switch 110.

With such a configuration, it is possible to execute the cruise function at the velocity associated with the cruise-A switch 110, without operating the cruise-A switch 110 twice.

Further, in a case where the short-pressing operation is performed on the cruise-A switch 110,
the control unit 310 causes the display unit 230 to display the cruise-A running velocity that has been stored in the storage unit 320 and is associated with the cruise-A switch 110.

With such a configuration, it is possible to check the previously stored cruising velocity, as well as displaying the cruising velocity setting screen.

Further, in a case where a predetermined time has passed since the short-pressing operation on the cruise-A switch 110, or in a case where a switch operation for hiding the cruising velocity setting screen is performed,
the control unit 310 causes the display unit 230 to hide the cruising velocity setting screen.

With such a configuration, it is possible to prevent the cruising velocity setting screen from remaining displayed.

Further, in a case where the cruise-B switch 120 is operated while the cruise function is being executed by an operation on the cruise-A switch 110,
the control unit 310 changes the velocity of the cruise function being executed by the operation on the cruise-A switch 110, to the velocity of the cruise function to be executed by an operation on the cruise-B switch 120.

With such a configuration, the velocity to be reproduced by the cruise function can be easily switched.

Further, in a case where switching between forward movement and backward movement is performed during execution of the cruise function,
the control unit 310 continues the cruise function, and causes the tractor 1 to run at the set velocity.

With such a configuration, even in a case where switching between forward movement and backward movement is performed, the cruise function can be continued at the set velocity.

Further, in a case where an operation for a velocity change is performed with the operating lever 100 (a transmission operating tool) for changing the velocity of the tractor 1 during execution of the cruise function,
the control unit 310 continues the cruise function, and causes the tractor 1 to run at the set velocity.

With such a configuration, even in a case where an operation for a velocity change (switching between vehicle velocity ranges) using the operating lever 100 is performed during execution of the cruise function, the cruise function can be continued.

Further, the display unit 230
constitutes the meter panel 200 that displays the velocity of the working vehicle that is running, and
the control unit 310
causes the display unit 230 to display the set velocity of the cruise function only in a case where an operation is performed on the cruise-A switch 110 or the cruise-B switch 120.

With such a configuration, the set velocity of the cruise function can be displayed on the meter panel 200 only when the display is necessary.

Note that the tractor 1 according to the present embodiment is an embodiment of the working vehicle according to the disclosure.

Also, the operating lever 100 according to the present embodiment is an embodiment of the operating unit and the transmission operating tool according to the disclosure.

Further, the short-pressing operation according to the present embodiment is an embodiment of the first operation and the third operation according to the disclosure.

Also, the long-pressing operation according to the present embodiment is an embodiment of the second operation and the fourth operation according to the disclosure.

Further, the cruise-A running velocity according to the present embodiment is an embodiment of the first velocity according to the disclosure.

Also, the cruise-B running velocity according to the present embodiment is an embodiment of the second velocity according to the disclosure.

Further, the cruise-A switch 110 according to the present embodiment is an embodiment of the first switch according to the disclosure.

Also, the cruise-B switch 120 according to the present embodiment is an embodiment of the second switch according to the disclosure.

Further, the auxiliary transmission check switch 160 and the shuttle check switch 170 according to the present embodiment are an embodiment of the third switch according to the disclosure.

Although each embodiment of the disclosure has been described above, the disclosure is not limited to the above configurations, and various modifications can be made within the scope of the invention disclosed in the claims.

Specifically, the modes of operations related to the cruise function using the various switches of the operating lever 100 are not limited to the examples described above. For example, in the present embodiment, an example in which the first operation and the third operation on the cruise-A switch 110 and the cruise-B switch 120 are short-pressing operations, and the second operation and the fourth operation are long-pressing operations has been described. However, operations on the respective switches are not limited to the above examples, and various operations can be adopted. Also, each of the switches is not necessarily a switch that can be pressed, and various kinds of switches can be adopted.

Further, in the above embodiment, a configuration in which the cruise function is continued in a case where the moving direction or the vehicle velocity range of the tractor 1 is changed during execution of the cruise function is adopted. However, the disclosure is not limited to the above example. For example, it is possible to adopt a configuration in which the cruise function is canceled in a case where the moving direction or the vehicle velocity range of the tractor 1 is changed during execution of the cruise function.

Further, in the above embodiment, a configuration in which the cruising velocity setting screen can be hidden by performing a predetermined operation (an operation on a check button, for example) is adopted. However, the disclosure is not limited to the above example. For example, it is possible to adopt a configuration in which the cruising velocity setting screen cannot be hidden.

Further, in the above embodiment, the tractor 1 has been described as an example of a working vehicle, but working vehicles are not limited to such a mode. For example, a working vehicle may be some other agricultural vehicle, a construction vehicle, an industrial vehicle, or the like.

## Claims

1. A working vehicle (1) that has a cruise function for automatically running at a set velocity, the working vehicle (1) comprising:
a control unit (310) capable of executing the cruise function;
an operating unit (100) that has a first switch (110) for performing an operation related to the cruise function;
a display unit (230) capable of displaying a cruising velocity setting screen on which a velocity to be used during execution of the cruise function is set; and
a storage unit (320) capable of storing the velocity to be used during execution of the cruise function,
wherein the control unit (310) is configured to, in a case where a first operation is performed on the first switch (110), cause the display unit (230) to display the cruising velocity setting screen, and cause the storage unit (320) to store a first velocity that is set on the cruising velocity setting screen, the first velocity being associated with the first switch (110) and,
the control unit (310) is configured to, in a case where the first switch (110) is operated while the cruising velocity setting screen is displayed, execute the cruise function at the first velocity.

2. The working vehicle (1) according to claim 1, wherein the control unit (310) is configured to, in a case where a second operation different from the first operation is performed on the first switch, cause the storage unit (320) to store a running velocity used during execution of the second operation, the running velocity being associated with the first switch (110) and execute the cruise function at the running velocity used during execution of the second operation, without causing the display unit (230) to display the cruising velocity setting screen.

3. The working vehicle (1) according to claim 1 or 2, wherein the control unit (310) is configured to, in a case where a third operation is performed on a second switch (120) provided on the operating unit (100), cause the display unit (230) to display the cruising velocity setting screen, and cause the storage unit (320) to store a second velocity that has been set on the cruising velocity setting screen and is different from the first velocity, the second velocity being associated with the second switch (120) and,
the control unit (310) is configured to, in a case where the second switch (120) is operated while the cruising velocity setting screen is displayed, execute the cruise function at the second velocity.

4. The working vehicle (1) according to any of claims 1 to 3, wherein the control unit (310) is configured to, in a case where a fourth operation is performed on a second switch (120) provided on the operating unit, cause the storage unit (320) to store a running velocity used during execution of the fourth operation, the running velocity being associated with the second switch (120) and execute the cruise function at the running velocity used during execution of the fourth operation, without causing the display unit (230) to display the cruising velocity setting screen.

5. The working vehicle (1) according to any of claims 1 to 4, wherein the control unit (310) is configured to, in a case where an operation is simultaneously performed on the first switch (110) and a third switch (160,170) provided on the operating unit, execute the cruise function at the velocity associated with the first switch (110) without causing the display unit (230) to display the cruising velocity setting screen.

6. The working vehicle (1) according to any of claims 1 to 5, wherein the control unit (310) is configured to, in a case where the first operation is performed on the first switch, cause the display unit (230) to display the first velocity that has been stored in the storage unit (320) and is associated with the first switch.

7. The working vehicle (1) according to any of claims 1 to 6, wherein the control unit (310) is configured to, in a case where a predetermined time has passed since the first operation performed on the first switch (110) or in a case where a switch operation for hiding the cruising velocity setting screen is performed, cause the display unit (230) to hide the cruising velocity setting screen.

8. The working vehicle (1) according to claim 3 or 4 taken in combination with any of claims 1 to 7, wherein the control unit (310) is configured to, in a case where the second switch (120) is operated while the cruise function is being executed by an operation on the first switch, change a velocity of the cruise function being executed by the operation on the first switch (110) to a velocity of the cruise function to be executed by an operation on the second switch.

9. The working vehicle (1) according to any of claims 1 to 8, wherein pthe control unit (310) is configured to, in a case where switching between forward movement and backward movement is performed during execution of the cruise function, continue the cruise function, and cause the working vehicle (1) to run at the set velocity.

10. The working vehicle (1) according to any of claims 1 to 9, wherein the control unit (310) is configured to, in a case where an operation for a velocity change is performed with a transmission operating tool (100) for changing a velocity of the working vehicle (1) during execution of the cruise function, continue the cruise function, and cause the working vehicle (1) to run at the set velocity.

11. The working vehicle (1) according to claim 3 or 4 taken in combination with any of claims 1 to 10, wherein
the display unit (230) constitutes a meter panel (200) that is configured to display a velocity of the working vehicle (1) that is running, and
the control unit (310) is configured to cause the display unit (230) to display the set velocity of the cruise function only in a case where an operation is performed on the first switch (110) or the second switch.
